# EUROPEAN PATENT APPLICATION

(11) **EP 4 760 468 A1**
(43) Date of publication of application: **17.06.2026**
(21) Application number: 23949318.2
(22) Date of filing: 18.08.2023
(51) Int. Cl.: G06F 3/04815

(54) **METHOD FOR OPERATING TARGET OBJECT, AND ELECTRONIC DEVICE, MEDIUM AND COMPUTER PROGRAM PRODUCT**

(71) Applicant: Siemens Aktiengesellschaft, 80333 München (DE)
(72) Inventor: GUO, Meng Yang, Shanghai 200082 (CN); DU, Feng, Shanghai 200082 (CN); WU, Jian Qiang, Shanghai 200082 (CN); HUA, Tao, Shanghai 200082 (CN); LI, Hao, Shanghai 200082 (CN)
(74) Representative: Isarpatent
(86) International application number: PCT/CN2023/113837
(87) International publication number: WO 2025/039124

(57) **Abstract**

Embodiments of the present application mainly relate to the field of remote control, and in particular, to a method for operating a target object, an electronic device, a medium, and a computer program product. The method includes: receiving a control signal of a user for operating a target object in a preset metaverse environment, where the preset metaverse environment includes a digital twin of a real scene, and the control signal includes: an action source, corresponding time information when an action occurs, a name of the target object, and action position information; moving, according to the name of the target object, to a preset position of the corresponding target object in the real scene; adjusting a pose of a robotic arm according to the action position information; and operating the target object in the real scene by means of the adjusted robotic arm.

## Description

### TECHNICAL FIELD

Embodiments of the present application mainly relate to the field of remote control, and in particular, to a method for operating a target object, an electronic device, a medium, and a computer program product.

### BACKGROUND

A power distribution cabinet is the general term for motor control centers. The power distribution cabinet receives energy from a power supply and distributes the energy to different regions or devices. The power distribution cabinet typically serves as a core device in a manufacturing environment and is located in a designated workspace, such as a control room or an electrical room. In conventional methods of monitoring, maintaining, and operating a power distribution cabinet, the participation of electrical engineers or technicians is typically required. However, such conventional manual methods are not only highly inefficient but also fail to ensure safety. In addition, if an engineer is not on-site when complex faults such as overloads or short circuits occur, the power distribution cabinet may shut down directly, resulting in significant financial losses.

### SUMMARY

Embodiments of the present application provide a method for operating a target object, an electronic device, a medium, and a computer program product. Through the embodiments of the present application, a user may be assisted in implementing an accurate remote operation on a target object.

According to a first aspect, a method for operating a target object is provided. The method includes: receiving a control signal of a user for operating a target object in a preset metaverse environment, where the preset metaverse environment includes a digital twin of a real scene, and the control signal includes: an action source, corresponding time information when an action occurs, a name of the target object, and action position information; moving, according to the name of the target object, to a preset position of the corresponding target object in the real scene; adjusting a pose of a robotic arm according to the action position information; and operating the target object in the real scene by means of the adjusted robotic arm.

According to a second aspect, an apparatus for operating a target object is provided. The apparatus includes: a receiving module, configured to receive a control signal of a user for operating a target object in a preset metaverse environment, where the preset metaverse environment includes a digital twin of a real scene, and the control signal includes: an action source, corresponding time information when an action occurs, a name of the target object, and action position information; a moving module, configured to move, according to the name of the target object, to a preset position of the corresponding target object in the real scene; an adjusting module, configured to adjust a pose of a robotic arm according to the action position information; and an operating module, configured to operate the target object in the real scene by means of the adjusted robotic arm.

According to a third aspect, an electronic device is provided. The electronic device includes: at least one memory, configured to store computer-readable code; and at least one processor, configured to call the computer-readable code, to perform the steps of the method according to the first aspect.

According to a fourth aspect, a computer-readable medium is provided. The computer-readable medium has computer-readable instructions stored therein. The computer-readable instructions, when executed by a processor, cause the processor to perform the steps of the method according to the first aspect.

According to a fifth aspect, a computer program product is provided. The computer program product is tangibly stored in a computer-readable medium and includes computer-executable instructions. The computer-executable instructions, when executed, cause at least one processor to perform the steps of the method according to the first aspect.

### BRIEF DESCRIPTION OF THE DRAWINGS

The following accompanying drawings are only intended to provide schematic illustrations and explanations of embodiments of the present application, but are not intended to limit the scope of the embodiments of the present application. In the accompanying drawings:
FIG. 1 is a schematic diagram of a digital twin of a real scene according to an embodiment of the present application;
FIG. 2 is a flowchart of a method for operating a target object according to an embodiment of the present application;
FIG. 3 is a schematic diagram of an apparatus for operating a target object according to an embodiment of the present application; and
FIG. 4 is a schematic diagram of an electronic device according to an embodiment of the present application.

### Descriptions of reference numerals:

| | | | | | |
|---|---|---|---|---|---|
| 200: | Method for operating target object | 201-204: | Method steps | | |
| 30: | Apparatus for operating target object | 31: | Receiving module | 32: | Moving module |
| 33: | Adjusting module | 34: | Operating module | 400: | Electronic device |
| 401: | Processor | 402: | Communications interface | 403: | Memory |
| 404: | Communications bus | 405: | Program | | |

### DETAILED DESCRIPTION

A subject described in this specification is discussed now with reference to exemplary implementations. It should be understood that, discussion of these implementations is merely intended to make a person skilled in the art better understand and implement the subject described in this specification, and is not intended to limit the protection scope of the claims, the applicability, or examples. The functions and arrangements of the discussed elements may be changed without departing from the protection scope of embodiments of the present application. Various processes or components may be omitted, replaced, or added in each example according to requirements. For example, a described method may be performed according to a sequence different from the sequence described herein, and steps may be added, omitted or combined. In addition, features described in some examples may further be combined in other examples.

As used in this specification, the term "include" and variants thereof represent open terms, and means "including but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly. Unless otherwise clearly specified, the definition of one term is consistent in the entire specification.

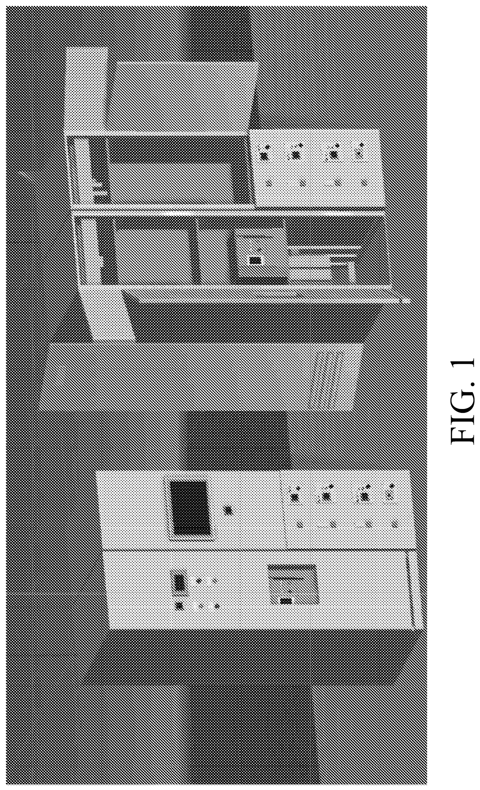

In the embodiments of the present application, a digital twin of a scene corresponding to an actual environment is created in a virtual game engine, as shown in FIG. 1, to create a corresponding metaverse. The metaverse may be presented using various mixed reality technologies (including but not limited to augmented reality (Augmented Reality, AR), virtual reality (Virtual Reality, VR), mixed reality (Mixed Reality, MR), etc.), enabling a user to perform an interactive operation on a relevant device (e.g., a head-mounted device, a portable device, etc.). Specifically, the user can use the relevant device to simulate a controlled target object, such as a power device, in the metaverse to generate control signals, and these control signals will be received by a robot and converted into specific operations on the target object in a real environment, thereby achieving the purpose of remote control.

The following describes the embodiments of the present application with reference to the accompanying drawings.

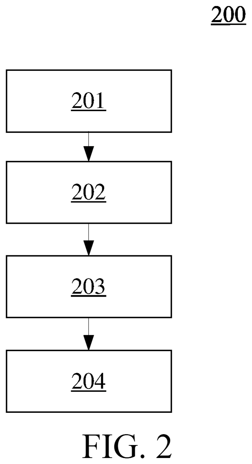

FIG. 2 is a flowchart of a method for operating a target object according to an embodiment of the present application. As shown in FIG. 2, a method 200 for operating a target object includes:
Step 201: Receive a control signal of a user for operating a target object in a preset metaverse environment, where the preset metaverse environment includes a digital twin of a real scene, and the control signal includes: an action source, corresponding time information when an action occurs, a name of the target object, and action position information.
Step 201 may be applied to a robot. Optionally, before step 201, a simulator may be used to synchronously simulate operation actions of the user on the target object in a preset metaverse, so as to ensure that the motion of the robot in the real scene does not conflict with a surrounding environment, thereby further improving the safety of a mechanical device and protecting the overall environment. If a relevant conflict occurs, for example, a robotic arm of the robot may collide with surrounding devices, a notification of operation failure is immediately sent to the user through a head-mounted device or other receiving devices, and forwarding of the control signal is suspended at the same time. Conversely, if the simulation shows that the operation may be performed successfully, the control signal of the user for operating the target object in the preset metaverse is sent to a server, and the server forwards the control signal to the robot, to perform an actual target object operation. Optionally, conflicts between the motion of the robot and the surrounding environment may include, but are not limited to, (1) physical collision: the robot or the robotic arm may collide with surrounding devices or mechanisms, and such a conflict may be caused by a mismatch between a position or action path of the robot and the spatial layout of the surrounding environment; and (2) safety conflict: the action of the robot may cause excessive operation of the device, resulting in failure to implement the action.

Optionally, when the server receives the control signal of the user for operating the target object in the preset metaverse and a signal for activating the robot to perform a remote operation, the server sends the control signal of the user for operating the target object in the preset metaverse to the robot.

Optionally, the robot may be composed of an automated guided vehicle and the robotic arm. The automated guided vehicle is responsible for positioning and moving within a site, while the robotic arm is responsible for performing fine operations. Optionally, the server may be located on the cloud or on an edge to meet different network environments and real-time requirements.

Step 202: Move, according to the name of the target object, to a preset position of the corresponding target object in the real scene.

In an embodiment, before step 202, the name of the target object in the real scene and corresponding preset position information are stored.

In an embodiment, before step 202, a navigation control system in the real scene is preset, to guide the robot to move. Next, guidance information in the preset navigation control system is determined according to the name of the target object. The robot moves to the preset position of the corresponding target object in the real scene according to the guidance information.

Optionally, the preset navigation control system in the real scene may be composed of different navigation identifiers or devices, such as QR (Quick Response) codes, lasers, magnetic tapes, etc.

QR Code: A QR code may be printed and pasted at a specific position to serve as a navigation identifier for the robot. Each QR code may encode specific position information. When the robot scans the QR code through a camera thereon, position information corresponding to the QR code may be recognized, so as to determine a specific position thereof in the scene.

Laser: A laser is typically used in a laser navigation system. In such a system, the laser emits a plurality of laser beams into the surrounding environment. Then, by measuring time or angle of the reflected laser beams, the robot may determine a position thereof and positions of surrounding objects. This method is typically used for obstacle avoidance, path planning, and precise positioning of the robot.

Magnetic Tape: A magnetic tape is typically laid on the ground to indicate a moving path of the robot. The robot is typically equipped with a sensor for sensing a magnetic field. When the robot travels on the magnetic tape, a travel path thereof may be tracked and adjusted by sensing changes in the magnetic field.

Step 203: Adjust a pose of a robotic arm according to the action position information.

Optionally, a 6D pose of the robotic arm is calculated according to the action position information. The robotic arm is adjusted according to the calculated 6D pose. By means of a visual system on the adjusted robotic arm, it is determined whether the robotic arm points to an object corresponding to a first object pointed to by the user in the preset metaverse environment in the real scene. When it is determined that the robotic arm points to the object corresponding to the first object pointed to by the user in the preset metaverse environment in the real scene, a central position of the object is detected by means of the visual system. The 6D pose of the robotic arm is adjusted again according to the detected central position.

Optionally, corresponding 6D poses may be preset according to positions of several buttons in the real scene. In this way, after receiving the action position information, the robotic arm may be directly adjusted according to the preset 6D poses, thereby simplifying operation procedures and improving control efficiency.

Step 204: Operate the target object in the real scene by means of the adjusted robotic arm.

In a scene, after adjusting the pose of the robotic arm, the robotic arm may press a real button in a power device in the real scene corresponding to a button pressed by the user in the metaverse environment, so as to complete the operations in the metaverse.

Through the embodiments of the present application, it is convenient for an operator to remotely control a corresponding target object in a real scene in a metaverse with the assistance of a robot. Embodiments of the present application not only enhance the capabilities of a robot-assisted system, but also promote more effective cooperation between operators and automation technologies, thereby ensuring safe and efficient operation of a target object.

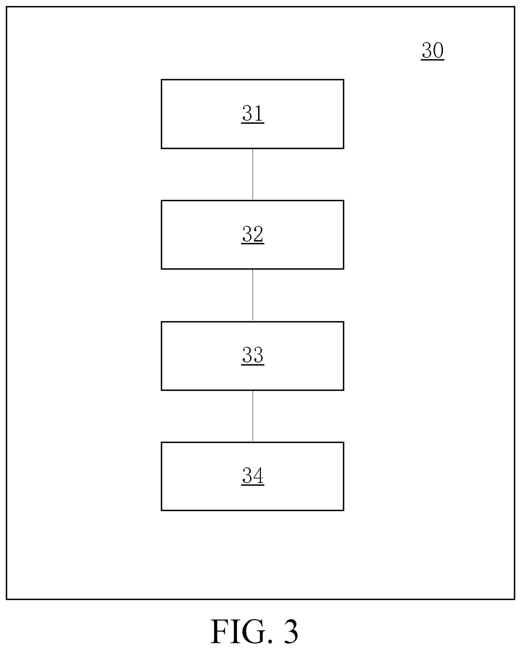

FIG. 3 is a schematic diagram of an apparatus for operating a target object according to an embodiment of the present application. As shown in FIG. 3, an apparatus 30 for operating a target object includes:
a receiving module 31, configured to receive a control signal of a user for operating a target object in a preset metaverse environment, where the preset metaverse environment includes a digital twin of a real scene, and the control signal includes: an action source, corresponding time information when an action occurs, a name of the target object, and action position information;
a moving module 32, configured to move, according to the name of the target object, to a preset position of the corresponding target object in the real scene;
an adjusting module 33, configured to adjust a pose of a robotic arm according to the action position information; and
an operating module 34, configured to operate the target object in the real scene by means of the adjusted robotic arm.

Embodiments of the present application not only enhance the capabilities of a robot-assisted system, but also promote more effective cooperation between operators and automation technologies, thereby ensuring safe and efficient operation of a target object.

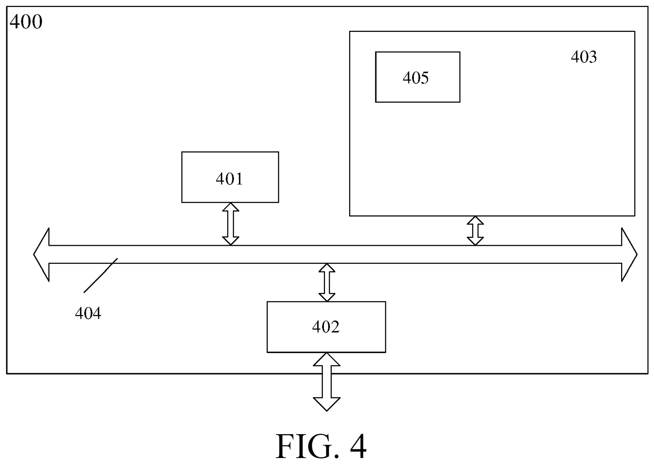

FIG. 4 is a schematic diagram of an electronic device according to an embodiment of the present application. Specific embodiments of the present application do not limit specific implementations of the electronic device. As shown in FIG. 4, an electronic device 400 may include: a processor (processor) 401, a communications interface (Communications Interface) 402, a memory (memory) 403, and a communications bus 404.

The processor 401, the communications interface 402, and the memory 403 communicate with each other via the communications bus 404.

The communications interface 402 is configured to communicate with another electronic device or server.

The processor 401 is configured to execute a program 402. Specifically, related steps in any method embodiment among the plurality of foregoing method embodiments may be performed.

Specifically, the program 405 may include program code. The program code includes a computer operation instruction.

The processor 401 may be a CPU or an application specific integrated circuit ASIC (Application Specific Integrated Circuit), or may be configured as one or more integrated circuits for implementing this embodiment of the present application. One or more processors included in an intelligent device may be processors of a same type, for example, one or more CPUs, or may be processors of different types, for example, one or more CPUs and one or more ASICs.

The memory 403 is configured to store the program 405. The memory 403 may include a high-speed RAM, or may further include a non-volatile memory (non-volatile memory), for example, at least one magnetic disk storage.

The program 405 may be specifically configured for causing the processor 401 to perform any method in the plurality of method embodiments among the foregoing embodiments.

For specific implementation of steps in the program 405, refer to corresponding descriptions in corresponding steps and units in the foregoing method embodiments for operating a target object. Details are not described herein again. A person skilled in the art may clearly understand that, to achieve convenient and concise description, for specific working processes of the foregoing device and module, refer to descriptions of corresponding processes in the foregoing method embodiments. Details are not described herein again.

The present application further provides a computer-readable storage medium, having, stored therein, instructions for causing a machine to perform any method in the plurality of method embodiments as described herein. Specifically, a system or apparatus equipped with a storage medium may be provided. The storage medium stores software program code that implements functions of any one of the foregoing embodiments, and a computer (or a CPU or an MPU) of the system or apparatus is caused to read and execute the program code stored in the storage medium.

In this case, the program code read from the storage medium may implement the functions in any one of the foregoing embodiments. Therefore, the program code and the storage medium for storing the program code constitute a part of the present application.

Embodiments of the storage medium for providing the program code include a floppy disk, a hard disk, a magneto-optical disk, an optical disk (e.g., a CD-ROM, a CD-R, a CD-RW, a DVD-ROM, a DVD-RAM, a DVD-RW, or a DVD+RW), a magnetic tape, a non-volatile storage card, and a ROM. Optionally, the program code may be downloaded from a server computer by using a communications network.

An embodiment of the present application further provides a computer program product, including computer instructions. The computer instructions instruct a computing device to perform operations corresponding to any one of the foregoing plurality of method embodiments.

It should be noted that according to implementation needs, each component/step described in the embodiments of the present application may be divided into more components/steps, or two or more components/steps or some operations of the components/steps may be combined into a new component/step, so as to achieve the objectives of the embodiments of the present application.

The method according to the embodiments of the present application may be implemented in hardware and firmware, or implemented as software or computer code that may be stored in a recording medium (e.g., a CDROM, a RAM, a floppy disk, a hard disk, or a magneto-optical disk), or implemented as computer code that is downloaded by using a network, is originally stored in a remote recording medium or a non-transitory machine-readable medium, and is to be stored in a local recording medium. Thus, the method described herein may be processed by such software stored on a recording medium using a general-purpose computer, a special-purpose processor, or programmable or special-purpose hardware (e.g., an ASIC or an FPGA). It may be understood that a computer, a processor, a microprocessor controller, or programmable hardware includes a storage component (e.g., a RAM, a ROM, or a flash memory) that may store or receive software or computer code. When the software or the computer code is accessed and executed by the computer, the processor, or the hardware, the method described herein is implemented. In addition, when a general-purpose computer accesses code for implementing the method herein, the general-purpose computer for executing the code is converted into a special-purpose computer for performing the method herein.

It should be noted that not all steps and modules in the procedures and the diagrams of system structures are necessary, and some steps or modules may be omitted according to an actual requirement. An execution sequence of the steps is not fixed and may be adjusted according to a requirement. The system structures described in the foregoing embodiments may be physical structures or logical structures. To be specific, some modules may be implemented by a same physical entity. Alternatively, some modules may be implemented by a plurality of physical entities, or may be implemented by some components in a plurality of independent devices together.

In the foregoing embodiments, hardware modules may be implemented mechanically or electrically. For example, a hardware module may include a permanent special-purpose circuit or logic (e.g., a dedicated processor, FPGA or ASIC) to complete a corresponding operation. The hardware module may further include programmable logic or a circuit (e.g., a general-purpose processor or another programmable processor), which may be temporarily set by software to complete a corresponding operation. A specific implementation (a mechanical manner, a special-purpose permanent circuit, or a temporarily set circuit) may be determined based on costs and time considerations.

The present disclosure is shown and described in detail above by using the accompanying drawings and preferred embodiments. However, the present disclosure is not limited to these disclosed embodiments. Based on the foregoing plurality of embodiments, a person skilled in the art may learn that code review means in the foregoing different embodiments may be combined to obtain more embodiments of the present disclosure, and these embodiments also fall within the protection scope of the present disclosure.

Nouns and pronouns about people in this patent application are not limited to specific genders.

## Claims

1. A method for operating a target object, comprising:
- receiving (201) a control signal of a user for operating a target object in a preset metaverse environment, wherein the preset metaverse environment comprises a digital twin of a real scene, and the control signal comprises: an action source, corresponding time information when an action occurs, a name of the target object, and action position information;
- moving (202), according to the name of the target object, to a preset position of the corresponding target object in the real scene;
- adjusting (203) a pose of a robotic arm according to the action position information; and
- operating (204) the target object in the real scene by means of the adjusted robotic arm.

2. The method according to claim 1, wherein before the receiving (201) a control signal of a user for operating a target object in a preset metaverse, the method further comprises:
- sending, by a server when the server receives the control signal of the user for operating the target object in the preset metaverse and a signal for activating a robot to perform a remote operation, the control signal of the user for operating the target object in the preset metaverse to the robot.

3. The method according to claim 1, wherein before the moving (202), according to the name of the target object, to a preset position of the corresponding target object in the real scene, the method further comprises:
- storing the name of the target object in the real scene and corresponding preset position information.

4. The method according to claim 1, wherein
- before the moving (202), according to the name of the target object according to the name of the target object, to a preset position of the corresponding target object in the real scene, the method further comprises:
- presetting a navigation control system in the real scene, to guide the robot to move;
- the moving (202), according to the name of the target object according to the name of the target object, to a preset position of the corresponding target object in the real scene comprises:
- determining guidance information in the preset navigation control system according to the name of the target object; and
- moving, according to the guidance information, to the preset position of the corresponding target object in the real scene.

5. The method according to claim 1, wherein the adjusting (203) a pose of a robotic arm according to the action position information comprises:
- calculating a 6D pose of the robotic arm according to the action position information;
- adjusting the robotic arm according to the calculated 6D pose;
- determining, by means of a visual system on the adjusted robotic arm, whether the robotic arm points to an object corresponding to a first object pointed to by the user in the preset metaverse environment in the real scene;
- when it is determined that the robotic arm points to the object corresponding to the first object pointed to by the user in the preset metaverse environment in the real scene,
- detecting a central position of the object by means of the visual system; and
- adjusting the 6D pose of the robotic arm again according to the detected central position.

6. An apparatus for operating a target object, comprising:
- a receiving module (31), configured to receive a control signal of a user for operating a target object in a preset metaverse environment, wherein the preset metaverse environment comprises a digital twin of a real scene, and the control signal comprises: an action source, corresponding time information when an action occurs, a name of the target object, and action position information;
- a moving module (32), configured to move, according to the name of the target object, to a preset position of the corresponding target object in the real scene;
- an adjusting module (33), configured to adjust a pose of a robotic arm according to the action position information; and
- an operating module (34), configured to operate the target object in the real scene by means of the adjusted robotic arm.

7. An electronic device (400), comprising: a processor (401), a communications interface (402), a memory (403), and a communications bus (404), wherein the processor (401), the memory (403), and the communications interface (402) communicate with each other via the communications bus (404); and
the memory (403) is configured to store at least one executable instruction, and the executable instruction causes the processor to perform operations corresponding to the method for operating a target object according to any one of claims 1 to 5.

8. A computer storage medium, having a computer program stored therein, wherein the program, when executed by a processor, implements the method for operating a target object according to any one of claims 1 to 5.

9. A computer program product, the computer program product being tangibly stored in a computer-readable medium and comprising computer-executable instructions, wherein the computer-executable instructions, when executed, cause at least one processor to perform the method for operating a target object according to any one of claims 1 to 5.
